# EUROPEAN PATENT APPLICATION

(11) **EP 2 626 831 A1**
(43) Date of publication of application: **14.08.2013**
(21) Application number: 13153196.4
(22) Date of filing: 30.01.2013
(51) Int. Cl.: G06Q 50/00, G06Q 10/10, G06F 17/30

(54) **Tag Inheritance**

(30) Priority: 09.02.2012 US 201261597125 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The present invention relates to a method for generating tags for content items of an online system and an online system. A method for generating tags for content items of an online system is provided, comprising the steps of providing, by a user of the online system, a content item in the online system, said content item being linked with one or more other content items of the online system; assigning a first group of tags to the content item; automatically generating a second group of tags based on tags associated with at least one of the one or more other content items; and assigning the second group of tags to the content item. Furthermore, an online system enabling generation of tags for content items and a server hosting the online system are defined.

## Description

### TECHNICAL FIELD

The present invention relates to a method for generating tags for content items of an online system and an online system. Moreover, the present invention may relate to an online system hosting content items and enabling an automatic generation of tags for the content items.

### BACKGROUND

In online systems, such as social networks, online platforms, communication and networking sites and other systems and interfaces, which may be accessible via a network by a plurality of users and enable users to initiate and participate in a plurality of actions, users may provide online content which may be shared with other users of the online system. For example, the online content may be uploaded from a client operated by a user via the network to the online system and may be stored and published by the online system. Other users may access the online content by using respective clients connected to the online system.

Typically tags, such as tag words, flags, metadata and other information, are associated with the online content in order to indicate to other users the type, style, format, or kind of the online content. Tags may be added either explicitly by the user or implicitly by the online system, for example by scanning the online content and extracting related tags.

Appropriately chosen tags may increase the amount of hits when other users search for online content in the online system. However, an explicit definition of tags may be demanding for users and therefore users may quickly select either inappropriate tags or may even entirely skip the definition of tags. Also, approaches for generation of tag words by online systems applying scanning of the data content may be inaccurate. For example, pattern recognition techniques may be adapted for a certain type of content and therefore will fail or deliver imprecise results for other or even unknown content formats.

Thus, there is a need in the art for a method and a system that improves the process of tag generation for online content.

### SUMMARY

The problem is solved by a method for generating tags for content items of an online system and an online system as defined in the independent claims. Furthermore, a computer readable-medium and a server are defined. Preferred embodiments are defined in the corresponding dependent claims.

A first aspect of the present disclosure provides a method for generating tags for content items of an online system, comprising the steps of providing, by a user of the online system, a content item in the online system, said content item being linked with one or more other content items of the online system; assigning a first group of tags to the content item; automatically generating a second group of tags based on tags associated with at least one of the one or more other content items; and assigning the second group of tags to the content item.

The user of the online system may provide the content item in a variety of ways. For example, the user may create an online content and upload the online content to the online system. The online system may generate a new content item for the uploaded online content and link the new content item to the profile of the user, which may, as well, be represented as a content item. However, the user may also create a new content item, or use, share, copy, move and modify an existing content item and the related online content within the online system. For example, the user may interact with a content item created by another user in order to provide a content item in the online system.

Hence, each content item may represent any online content, such as images, audio and video data, documents and other digital data content or data streams and feeds, which may be provided by the online system to users. In addition, a content item of the online system may represent any user of the online system or an activity of one or more users of the online system. The content items may be represented by a data structure which refers to the related online content and enables each content item to be linked, coupled or connected with one or more other content items.

For each content item provided at the online system by the user, the first group of tags may be directly defined by the user or may be deduced by the online system from data of the content item. For example, the user may specify the content by defining one or more related tag words. Also, the online system may scan the data of the content item and may provide one or more tags, for example, related to the type of the content. Thus, the first group of tags may comprise one or more tags directly assigned to the content item derived from the data of the content item. However, if no suitable tags can be directly assigned to the content item, the first group of tags may be empty, as well.

In contrast to the first group of tags the second group of tags is automatically generated based on tags that are associated with at least one of the linked content items. Thus, the second group of tags is derived or inherited from already existing content items which are linked to the provided content item. The automatic generation may be, for example, performed by the online system or a processing component or a dedicated module of the online system which may analyze the linked content items, determine the associated tags and perform the automatic generation of the second group of tags. In a subsequent step, the tags of the second group may be assigned to the content item and merged with the already assigned tags of the first group.

In particular, any new content item may be automatically linked to the user profile, which may, as well, be represented by a content item. Thus, the tags associated with the content item representing the user profile may be utilized to define the second group of tags assigned to the new content item, thereby inheriting these tags under flexible rules from the user to the created content. The inherited tags may be added automatically by the system and handled in a different way compared to the tags of the first group. For example, the tags of the second group may be weighted differently compared to the user-added or system-generated tags of the first group. Hence, creating a new online content in an online system may create next to any tags directly assigned to the respective content item one or more inherited tags that are, for example, derived from a content item representing the creator of the new online content.

Furthermore, if an existing online content is shared, copied, moved or modified in some way by another user, the content item representing the online content may be linked to the content item representing the user profile of the other user and the tags associated with the linked content item may be added as inherited tags of the second group to the content item representing the shared, copied, moved or modified online content. Hence, utilizing an online content in any way can add inherited tags to the used content item that are, for example, derived from a content item representing the user who utilized the content.

Also, two content items can be interrelated by inherited tags through one action executed by a user or by a plurality actions of one user that are executed one after another during a relatively short period of time. This sequence of actions may create a thin connection between the content items defined by the user performing the actions and the timely execution of the respective actions.

The method allows for a flexible representation of online content within online systems and improved generation of tags characterizing the online content. In particular, even if a user does not define any tags for the provided content or if the online system is unable to directly derive tags from the data of the provided content, a meaningful group of tags may be automatically derived and inherited from the linked content items. In general, tags can be inherited from any content item to any other content item, such as from a content, activity or user to any other content, activity or user. For example, tags may be inherited from user to user, content to user, user to content, activity to content, and content to content, to name some. In particular, the inherited tags are derived from semantic links between content items that eventually represent shared interests, topics, and common goals. Hence, the method greatly improves the integrity, accuracy, and reliability of automatically generated tags for online content in online systems leading to a better processing and improved usability of the online system.

In a preferred embodiment, the method further includes weighting at least one of the tags of the first and second groups. The inherited tags of the second group can be inherited with a different weight compared to the directly assigned tags of the content from the first group. For example, the inherited tags may be less important when users search for content in the online system. However, the inherited tags may be also given a greater weight and be more important, for example, in online systems with closely linked content items having high quality tags. The use of different weights for tags of the respective groups may be used to improve the reliability of the resulting tags through balancing the direct assignment and inheritance of tags.

Preferably, said automatically generating includes, for each associated tag, determining a weighting value to be assigned to the corresponding tag in the second group of tags. For example, the tags of the first group may be assigned a first weighting value. Each tag considered in the second group of tags may be assigned its original weighting value with regard to the linked content item. This original weighting value may be further increased or decreased in order to determine the final weighting value for the respective tag.

According to another embodiment, said automatically generating further includes, for each associated tag, determining a similarity value between the associated tag and the tags of the first group, and increasing the weighting value of the corresponding tag in the second group in response to the similarity value. Also, in a subsequent step the tags of the second group may be merged with the already assigned tags of the first group such that the weighting values of tags of the second group are used to strengthen the weighting values of already assigned similar tags of the first group. For example, if an inherited tag of the second group is to be added to another content item and the other content item already has the respective tag or a similar tag assigned to it, the assigned tag may be strengthened, i.e., its quality or relevance may be increased. Based on the similarity value between the tags of the second and first groups, respectively, the tag of the second group could be discarded, such that tag duplicates are avoided.

In yet another embodiment, the step of automatically generating includes, for each linked content item, determining a similarity value between the content item and the linked content item, and adding one or more of the tags of the linked content item to the second group in response to the similarity value. If tags are inherited from one online content to another online content and if the online system determines or a user states or discerns their similarity or dissimilarity, the tags are included into or excluded from the second group, respectively, or weighted with weighting values corresponding to the similarity or dissimilarity of the content.

In particular, by analyzing the similarity of online content stored in or provided by the online system, the online system can automatically generate inherited tags derived from the creators of the content to the content that shares same or similar attributes. The similarity analysis can be automatically executed by the online system. Taking content similarity into account increases the connectivity between online content that users are looking for, and especially greatly improves the hit ratio for automatically recommended content.

According to a particularly preferred embodiment, the method further comprises the step of interacting, by the user, with at least one content item, wherein the provided content item represents a user profile of the user and said automatically generating includes adding at least one tag associated with the at least one content item to the second group of tags. Hence, if a user is interacting with online content, the tags from the online content can be inherited to the user, too. The inherited tags may be assigned to the content item representing the user profile and may be further processed. In addition, the tags may, for example, be added to an interest cloud of the user. Hence, tags may be added to the user profile based on activities of the user leading to a set of tags that accurately reflect the behaviour and interests of the user.

According to a particularly preferred embodiment, the amount of tags of the second group is limited by a threshold. The amount of tag words that are inherited from any linked content item, such as a user profile, can be determined and pre-set by the online system. For example, the inheritance can range from a full inheritance, wherein all tags of a linked content item are inherited, to a partial inheritance determined by a particular threshold value, such as an integer n, to a deactivated inheritance, where tags are not inherited, which may, for example be indicated by setting the threshold n to 0.

Preferably, the associated tags are organized according to levels and said automatically generating includes adding tags to the second group in response to a predetermined threshold level. Accordingly, the amount of inherited tags can be limited by level of the tags according to a particular level structure.

In yet another preferred embodiment, said automatically generating includes, for each linked content item representing an activity, determining an interaction level associated with the activity, and adding the tags of the linked content item to the second group in response to the interaction level. Thus, based on the activities of the user, a content item affected by the activity may inherit its tags to a content item related to the user, such as a content item representing a user profile of the user, based on the interaction level or other conditions. In particular, the affected content item may as well represent another user. Hence, based on the activities of the user, the other user may inherit his tags to the user which may, for example, reflect profile characteristics or interests. In order to inherit a tag from one content item to another content item, such as a user, online content or activity, the interaction level or quality needs to be high enough to meet the threshold level that triggers the transfer of the tags. The interaction level or quality may be indicative of a scoring defined through frequency of interacting, rating of both content items, sharing of connections and links between both content items, number of other interlinked tags, commenting or other factors.

In a further embodiment, each tag of the second group of tags constitutes a copy of the respective tag associated with at least one of the linked content items. Therefore, the inherited tags can be static. Thus, during inheritance copies of the tags are added to the second group and the tags remain in their current state irrespective of any changes of the original tags associated with the linked content items.

According to a preferred embodiment, each tag of the second group comprises a pointer to the respective tag associated with at least one of the linked content items. Accordingly, the inherited tags can be living. In particular, the inherited tags assigned to the provided content item may change whenever the original tag associated with the linked content item changes.

In a preferred embodiment, the method further comprises editing, by the user, the tags of the second group. The user may manage the inherited tags of the second group, by explicitly editing, deleting or adding tags of a content item, such as online content or another user that is connected with the user. Thus, the user is enabled to affect the way tags are inherited. In particular, a user having the permission to edit inherited tags can add, delete, move or copy the tags of the second group (or use other management actions on the inherited tags). A user may be granted permissions to edit the inherited tags whenever he is the owner of the content item, or by obtaining respective permissions from the owner. For example, a first user may obtain management permissions from a second user of the online system, wherein the second user may have a status of a friend of the first user, enabling the first user to edit the inherited tags of the second user.

Furthermore, a computer-readable medium according to the present disclosure having instructions stored thereon is provided, wherein said instructions, when installed and executed on a computing device, cause said computing device to automatically perform the method according to an embodiment of the disclosure. For example, the computing device may host an online system, such as a social network. The computing device may either remotely or locally access the computer-readable medium and transfer the instructions to a memory, such that the online system will be configured to execute the method for generating tags for content items of an online system, wherein the method comprises the steps of providing, by a user of the online system, a content item in the online system, said content item being linked with one or more other content items of the online system; assigning a first group of tags to the content item; automatically generating a second group of tags based on tags associated with at least one of the one or more other content items; and assigning the second group of tags to the content item.

In particular, the users of the online system may operate respective client devices, such as personal computers, portable devices, or mobile phones and smartphones, which may be configured to connect to the computing device hosting the online system, for example, via a wired or wireless network. The online system may generate, for each user, at least one input interface, which may be transferred to the respective client device of the user and displayed to the user. The user may use any interaction devices, such as a keyboard, mouse, and touch-sensitive devices, to generate an input which is transferred to the online system via the network. In turn, the online system may process the input and generate a corresponding output for the client device of the user.

Furthermore, according to the present disclosure, an online system is provided, comprising an input interface configured to enable a user of the online system to interact with the online system, said input interface including a first input module enabling the user to provide a content item in the online system, said content item being linked with one or more other content items of the online system and a second input module configured to assign a first group of tags to the content item. Furthermore, the online system comprises a processing unit configured to automatically generate a second group of tags based on tags associated with at least one of the one or more other content items, wherein the second group of tags is assigned to the content item.

According to a particularly preferred embodiment, at least one of the tags of the first and second groups are weighted by a weighting value.

According to another aspect, the processing unit is further configured to automatically generate the second group of tags by determining, for each associated tag, a weighting value to be assigned to the corresponding tag in the second group of tags.

In yet another preferred embodiment, the processing unit is further configured to automatically generate the second group of tags by determining, for each associated tag, a similarity value between the associated tag and the tags of the first group, and increasing the weighting value of the corresponding tag in the second group in response to the similarity value.

In a further embodiment, the processing unit is further configured to automatically generate the second group of tags by determining, for each linked content item, a similarity value between the content item and the linked content item, and adding one or more of the tags of the linked content item to the second group in response to the similarity value.

According to a preferred embodiment, the input interface further includes an input module enabling the user to interact with at least one content item, wherein the provided content item represents a user profile of the user and the processing unit is further configured to automatically generate the second group of tags by adding at least one tag associated with the at least one content item to the second group of tags.

In a preferred embodiment, the associated tags are organized according to levels and the processing unit is further configured to automatically generate the second group of tags by adding tags to the second group in response to a predetermined threshold level.

According to a particularly preferred embodiment, the processing unit is further configured to automatically generate the second group of tags by determining, for each linked content item representing an activity, an interaction level associated with the activity and adding the tags of the linked content item to the second group in response to the interaction level.

According to a another embodiment, the content item and the linked content items represent at least one of a user of the online system, an online content, and an activity of one or more users of the online system.

In yet another preferred embodiment, the input interface further includes a third input module enabling the user to edit the tags of the second group.

In a particularly preferred embodiment, the online system is a social network.

Furthermore, a server according to the present invention hosts an online system according to an embodiment of the present disclosure, said server being coupled to one or more clients via a network, said server including an interface circuitry to provide the input interface of the online system to the user of the online system operating at least one of the clients to interact with the online system; and at least one processor responsive to the interface circuitry and memory, providing the processing unit of the online system.

### BRIEF DESCRIPTION OF THE DRAWINGS

The specific features, aspects and advantages of the present disclosure will be better understood with regard to the following description and accompanying drawings where:
FIGURE 1 shows an input interface of a social network enabling a user to add tag words to a content item according to an embodiment;
FIGURES 2A and 2B show a schematic illustration of a tag inheritance system according to an embodiment;
FIGURE 3 shows another input interface of a social network according to an embodiment;
FIGURE 4 depicts a class diagram of a content item associated with tags according to an embodiment; and
FIGURE 5 illustrates an object diagram related to inheritance of tags according to an embodiment.

### DETAILED DESCRIPTION

In the following description of preferred embodiments reference is made to the drawings which show by way of illustration specific embodiments. It is to be understood that the embodiments may include changes in design and structure without departing from the scope of the present invention as defined in the claims.

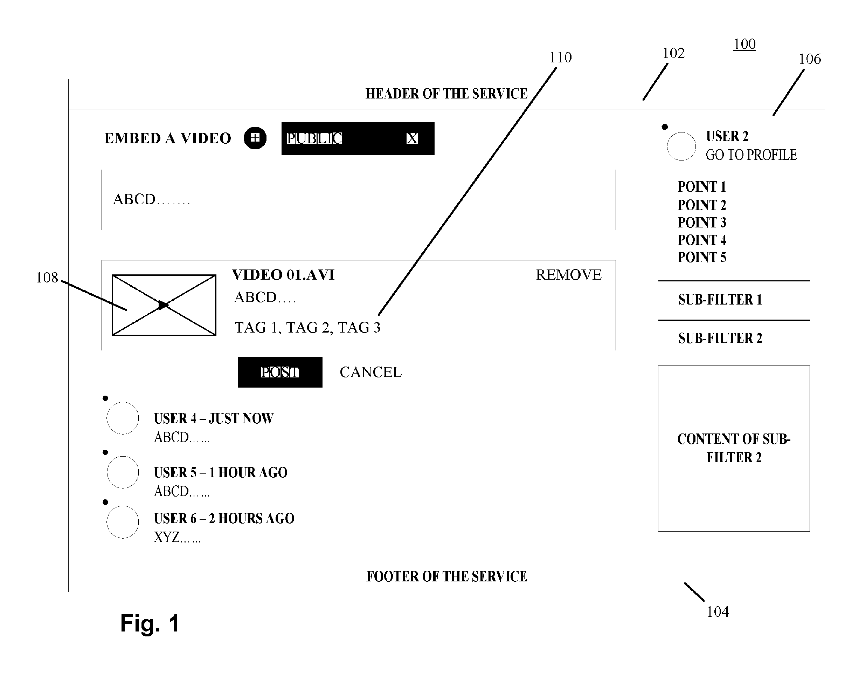

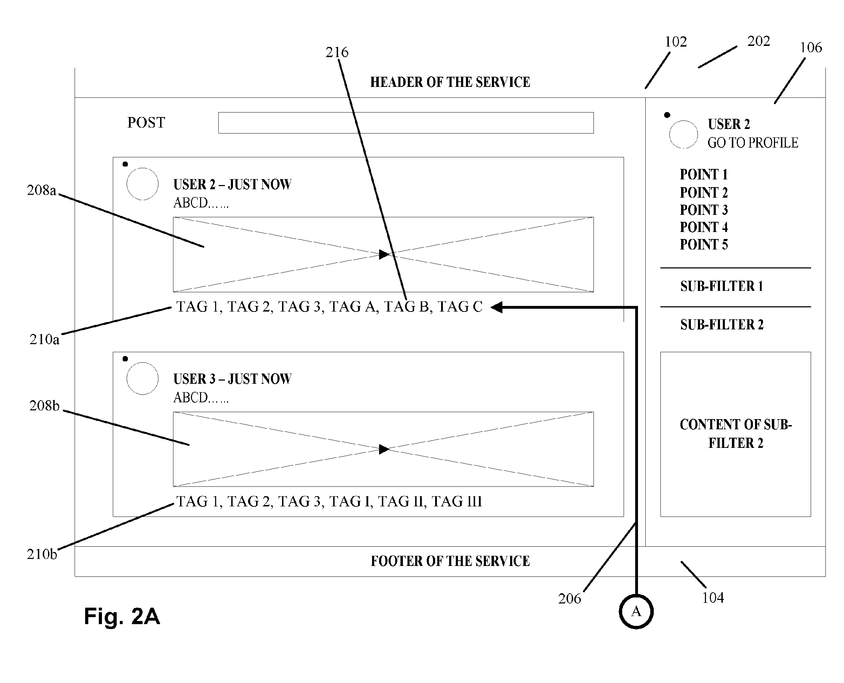

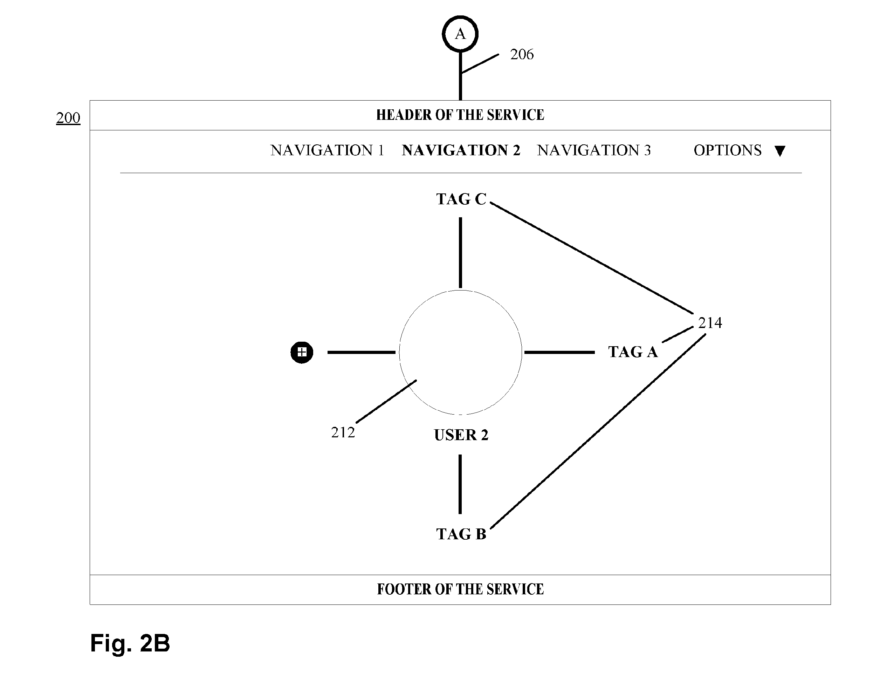

FIGURE 1 shows an input interface of a social network enabling a user to add tag words to a con-tent item according to an embodiment. The input interface 100 is presented as a page of a social network, which may be generated by a server hosting the social network and provided to a client device operated by the user. The page may comprise a header 102 and a footer 104 providing information related to a currently used service of the social network. Furthermore, the page may comprise information about the user, providing a username and other identification, such as an image of the user, and various further services of the user, such filters for content, in section 106. The user may, for example, upload content 108 to the social network. Thereafter, the input interface 100 may enable the user to define tag words 110, such as Tag1, Tag2, and Tag3, which are directly assigned to the uploaded content 108. Subsequently or concurrently to the specification of tags 110, a processing unit of the social network may analyze the interconnections and links of the uploaded content 108 within the social network and automatically generate inherited tags based on linked content items, as illustrated in FIGURES 2A and 2B.

FIGURES 2A and 2B depict a schematic illustration of a tag inheritance system according to an exemplary embodiment. As indicated by an arrow 206, the tag inheritance system 200 shown in FIGURE 2B may be triggered by an input interface 202 shown in FIGURE 2A. Similar to the input interface 100 of FIGURE 1, the input interface 202 may be presented as a page of a social network. Therefore, same or similar parts of the input interface 202 of FIGURE 2A have been designated with the same reference signs as in FIGURE 1.

After receiving and presenting the input interface 202 on a client device, the user, such as User 2, may upload an online content, for example, a video 208a to the social network. The user may add tag words 210a, such as three tags Tag1, Tag2 and Tag3. Yet, it is to be understood that the amount of tag words 210a is not limited to a particular number. Rather, the user may directly specify any number of tag words 210a without any restrictions. In fact, the user is not required to specify any tag word 210a at all. In addition or as an alternative, the social network may derive one or more tag words 210a by analyzing the uploaded online content.

Furthermore, the interface 202 may present to the user an update of content recently uploaded by other users, such as a similar video 208b uploaded by User 3. In addition to video 208b, the interface 202 may also present the tags 208b directly assigned to the video 208b by User 3.

Concurrently or subsequently to the specification of tag words 210a, the social network may trigger processing of the tag inheritance system 200 with regard to the uploaded video 208a. The tag inheritance system 200 may analyze any links of the content item representing video 208a to other content items of the social network. However, initially a newly created or uploaded online content, such as video 208a, will typically be linked with the user profile of the creator only, i.e. User 2. Irrespective of the number of linked content items, the tag inheritance system 200 may traverse a graph spanned by the uploaded content item 208a and linked content items, wherein the content items represent nodes and respective links and other relations edges. Any suitable algorithm for graph traversal may be used to analyze the interconnectivity of the neighbourhood of the node represented by the uploaded content, such as 208a, 208b, respectively.

As shown in FIGURE 2B, for each node of the graph, such as node 212 representing the user profile of User 2, the associated tags 214, depicted as TagA, TagB, TagC, may be analyzed and considered in further processing. For example, all tags of all directly linked content items may be inherited, such that tags 214 are added to the content 208a as inherited tags 216. Typically, a user profile will reflect the interests of the user specified by associated tags, such as tags 214, which may represent the user's interest cloud or a virtual DNA. Hence, by inheriting the tag words 214 to the uploaded content 208a, the list of directly assigned tags 210a will be enhanced by the inherited tags 216 and will therefore better approximate the data content and purpose of content 208a.

It is to be noted that the precise amount and quality of inheritance can be set by the system of the social network. In particular, the online system and the method for generating tags according to preferred embodiments are not limited by any particular inheritance approach. For example, a user U1 sharing the content of another user U2 may give rise to inherited tag words coming from the user profile of user U1 that are attached to the content created by user U2.

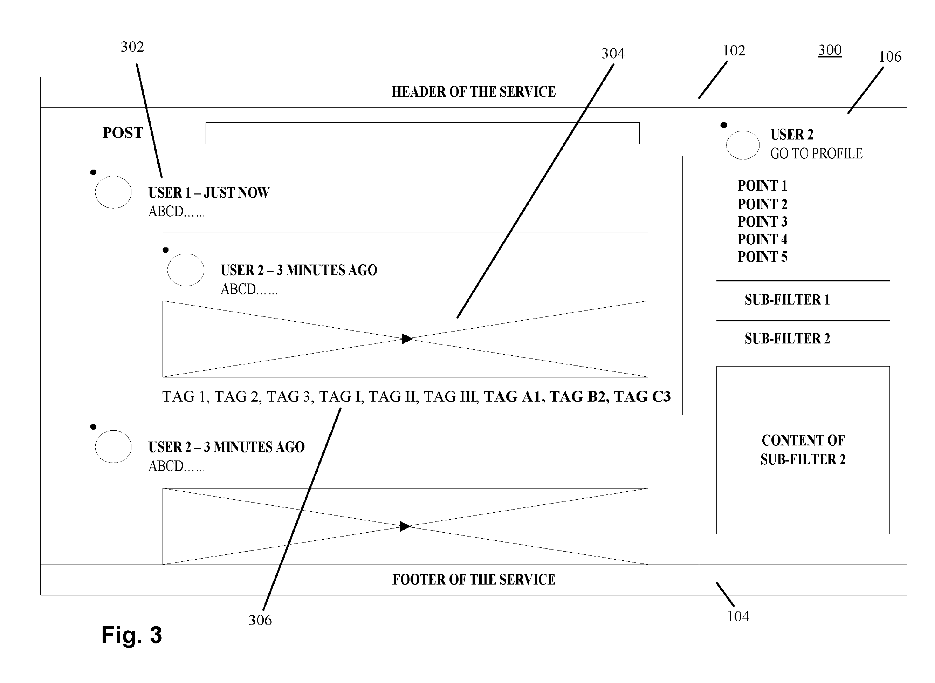

FIGURE 3 shows another input interface of a social network according to an example embodiment. Similar to the input interface 100 of FIGURE 1, the input interface 300 may be presented as a page of a social network. Therefore, same or similar parts of FIGURE 3 have been designated with the same reference signs as in FIGURE 1. Furthermore, as shown in FIGURE 3 a user, such as User 1, may re-share content 304 originally posted by User 2. The re-shared content 304 may now automatically inherit tags 306 from four different kind of sources: 1) the original tags Tag1, Tag2, Tag3 directly assigned to the content by User 2, as discussed with regard to FIGURE 1; 2) tags TagI, TagII, TagIII inherited from the user profile of User 2, as discussed with regard to FIGURE 2; 3) tags TagA1, TagB2, TagC3 inherited from the user profile of User 1; and optionally 4) tags (not shown) directly assigned to the re-shared content 304 by User 1.

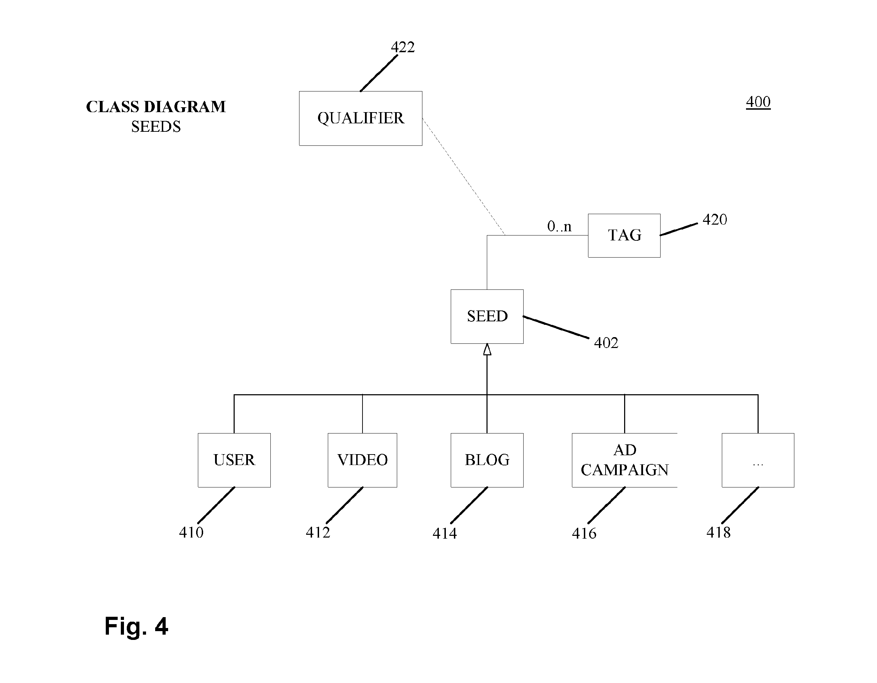

FIGURE 4 depicts a class diagram of a content item associated with tags according to an example embodiment. The class diagram 400 shows a base class Seed 402 and subclasses User 410, Video 412, Blog 414, AdCampaign 416, and 418. The base class 402 represents a generalization of a content item of an online system. The content item may, for example, represent a user as much as any content that is treated as an entity or object in a storage or database of the online system. The content item may be implemented as a container suitable for holding and representing the online content, which may include the respective content and related metadata. An implementation and data structure for a container, such as the Seed 402, for representing online content in online systems is disclosed in the US provisional application "Management of Online Content in a Network," application No. 61/533,842, the entire disclosure of which is incorporated herein by reference. Each subclass 410, 412, 414, 416, 418 represents a specialization of the Seed 402 directed to different types of online content, user profiles, and activities

The base class 402 is associated with zero or more instances of class Tag 420 representing a particular tag, such as a tag word, a flag, metadata or other information characterizing a content item, wherein each tag may have a certain qualifier 422 or weight. In particular, each Tag 420 of each Seed 402 may have its own qualifier value.

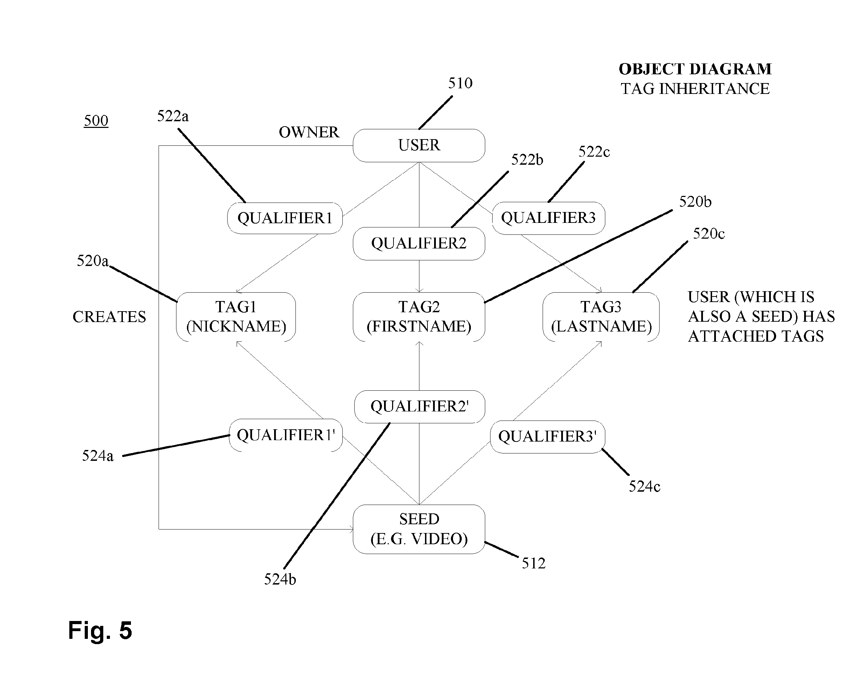

FIGURE 5 illustrates an object diagram related to inheritance of tags according to an embodiment. The object diagram 500 depicts an instance 510 of the class 410 of FIGURE 4, representing a user profile of a user. Since class 410 is a subclass of base class 402 representing a content item, the user profile is handled as any other content item of an online system. The user represented by instance 510 may create a new content item by uploading online content, such as a video file, to the online system. The system may recognize the type of the online content and may instantiate an object 512 of class 412 of FIGURE 4 to represent the uploaded video in the online system. The user object 510 will be linked to the video object 512 and user object 510 will be marked as owner of video object 512. Subsequently, the user may be enabled to directly assign tags (not shown) to the video object 512. In addition, a tag inheritance system of the online system may be triggered to automatically generate further tags for video object 512. For example, as shown in FIGURE 5, the tag inheritance system may analyze any content items linked to the video object 512 and associated tags. For example, the user object 510 may be associated with a plurality of instances of the class 420 of FIGURE 4, shown as tag objects 520a, 520b, 520c representing different characteristics and features related to the user object 510, wherein each tag object 520a, 520b, 520c may have a qualifier 522a, 522b, 522c, respectively.

The tag inheritance system of the online system may be configured to automatically add all tags of all directly linked content items to the new content item. Hence, the tag inheritance system may assign each tag object 520a, 520b, 520c to the video object 512, such that all tags attached to the user object 510 are inherited to the new video object 512. Yet, the tag inheritance system according to the example embodiment may compute a new qualifier 524a, 524b, 524c for each tag object 520a, 520b, 520c, respectively, associated with the video object 512. Preferably, qualifiers 524a, 524b, 524c will not be the same as qualifiers 522a, 522b, 522c, respectively. For example, a qualifier may comprise a weighting value and the corresponding weighting value of a qualifier of an inherited tag may be decreased in each inheritance step, for example, by multiplying the weighting value with a factor of less than 1.0, preferably between 0.5 and 0.95, and most preferably of 0.9. However, it is to be noted that any suitable computation of new qualifiers may be applied and the present disclosure is not limited to a certain approach or factor. For example, the qualifiers 522a, 522b, 522c may be inherited and adjusted based on configurable factors, which may be more or less than 1.0, resulting in a higher or lower inherited qualifiers, respectively, or which may even amount to 0.0 in which case the respective tag will not be inherited at all.

The class diagram of FIGURE 4 and the object diagram of FIGURE 5 correspond to a representation commonly used for object oriented programming languages. It is to be understood, that the example embodiments may be implemented by any suitable object oriented programming language, such as Java, Smalltalk, C++, C#, Pascal, and others, and that an implementation must not be restricted to classes, objects, associations and generalizations shown in Figs. 4 and 5. In particular, an implementation may comprise further and other classes, objects, associations and generalizations. Also, an implementation of the structure shown in Figs. 4 and 5 may be accomplished by using other programming approaches, such as function programming languages and logical programming languages.

The described embodiments may be provided as software, such as source code or another executable program, module or component of an executable at the online system. The online system may download the software or access the software on respective computer-readable media, and execute the respective instructions specified by the software. Also, the embodiments may be provided as specialized hardware or a combination of software and hardware, such as circuitry configured to perform the described methods according to exemplifying embodiments. Yet, it is to be noted that the present disclosure is not limited by a software or hardware implementation or a combination thereof.

The tag inheritance system according to example embodiments may be applied in a variety of use cases. For example, a user may browse through a social network and interact with online content that is marked with tag words that are not yet part of the tag words associated with his user profile, also called an interest cloud hereinafter. The social network may inherit a selection of top tag words of the online content to the user profile, but with a low weighting value since a similarity comparison may have revealed that the online content does not fit well with his interest cloud. The user may continue to browse further content in a similar area of same interest. This may cause that the weighting values of the inherited similar tag words will slowly increase and automatically better reflect the current interests of the user.

Even though methods an online systems according to embodiments of the present invention have been described with reference to exemplifying embodiments, it is to be understood that particular processing steps and structural features may be modified, added and omitted without leaving the scope of the present invention. Also, processing steps may be performed in a different order from the examples described. Similarly, the structural features of online systems and input interfaces may be arranged in a different configuration from the described example embodiments. Thus, it is to be understood that many modifications may be provided to the described embodiments without leaving the scope of the invention and that aspects of the invention can take many forms. The embodiments shown herein are intended to illustrate rather than to limit the invention as defined by the claims.

## Claims

1. An online system, comprising:
an input interface configured to enable a user of the online system to interact with the online system, said input interface including a first input module enabling the user to provide a content item in the online system, said content item being linked with one or
more other content items of the online system and a second input module configured to assign a first group of tags to the content item; and
a processing unit configured to automatically generate a second group of tags based on tags associated with at least one of the one or more other content items, wherein the second group of tags is assigned to the content item.

2. The online system of claim 1, wherein at least one of the tags of the first and second groups are weighted by a weighting value, wherein the processing unit is further configured to automatically generate the second group of tags by determining, for each associated tag, a weighting value to be assigned to the corresponding tag in the second group of tags.

3. The online system of claim 2, wherein the processing unit is further configured to automatically generate the second group of tags by determining, for each associated tag, a similarity value between the associated tag and the tags of the first group, and increasing the weighting value of the corresponding tag in the second group in response to the similarity value.

4. The online system according to one of the preceding claims, wherein the processing unit is further configured to automatically generate the second group of tags by determining, for each linked content item, a similarity value between the content item and the linked content item, and adding one or more of the tags of the linked content item to the second group in response to the similarity value.

5. The online system according to one of the preceding claims, wherein the input interface further includes an input module enabling the user to interact with at least one content item, wherein the provided content item represents a user profile of the user and the processing unit is further configured to automatically generate the second group of tags by adding at least one tag associated with the at least one content item to the second group of tags.

6. The online system according to one of the preceding claims, wherein the associated tags are organized according to levels and the processing unit is further configured to automatically generate the second group of tags by adding tags to the second group in response to a predetermined threshold level.

7. The online system according to one of the preceding claims, wherein the processing unit is further configured to automatically generate the second group of tags by determining, for each linked content item representing an activity, an interaction level associated with the activity and adding the tags of the linked content item to the second group in response to the interaction level.

8. The online system according to one of the preceding claims, wherein each tag of the second group of tags constitutes a copy of the respective tag associated with at least one of the linked content items, and/or comprises a pointer to the respective tag associated with at least one of the linked content items, wherein the content item and the linked content items represent at least one of a user of the online system, an online content, and an activity of one or more users of the online system.

9. The online system according to one of the preceding claims, wherein the online system is a social network.

10. A server hosting an online system according to one of the preceding claims, said server being coupled to one or more clients via a network, said server including:
an interface circuitry to provide the input interface of the online system to the user of the online system operating at least one of the clients to interact with the online system; and
at least one processor responsive to the interface circuitry and memory, providing the processing unit of the online system.

11. A method for generating tags for content items of an online system, comprising:
providing, by a user of the online system, a content item in the online system, said content item being linked with one or more other content items of the online system;
assigning a first group of tags to the content item;
automatically generating a second group of tags based on tags associated with at least one of the one or more other content items; and
assigning the second group of tags to the content item.

12. The method of claim 11, further including weighting at least one of the tags of the first and second groups, wherein said automatically generating includes, for each associated tag, determining a weighting value to be assigned to the corresponding tag in the second group of tags, determining a similarity value between the associated tag and the tags of the first group, and increasing the weighting value of the corresponding tag in the second group in response to the similarity value.

13. The method of claim 11 or 12, wherein said automatically generating includes, for each linked content item, determining a similarity value between the content item and the linked content item, and adding one or more of the tags of the linked content item to the second group in response to the similarity value.

14. The method according to one of the claims 11 to 13, further comprising interacting, by the user, with at least one content item, wherein the provided content item represents a user profile of the user and said automatically generating includes adding at least one tag associated with the at least one content item to the second group of tags.

15. The method according to one of the claims 11 to 14, wherein the associated tags are organized according to levels and said automatically generating includes adding tags to the second group in response to a predetermined threshold level, and/or wherein said automatically generating includes, for each linked content item representing an activity, determining an interaction level associated with the activity, and adding the tags of the linked content item to the second group in response to the interaction level.
